# EUROPÄISCHE PATENTANMELDUNG

(11) **EP 1 083 135 A1**
(43) Veröffentlichungstag der Anmeldung: **14.03.2001**
(21) Anmeldenummer: 00119013.1
(22) Anmeldetag: 01.09.2000
(51) Int. Cl.: B65G 1/137

(54) **Kommissioniersystem**

(30) Priorität: 07.09.1999 DE 19942706
(71) Anmelder: SIEMENS AKTIENGESELLSCHAFT, 80333 München (DE)
(72) Erfinder: Limmer, Gerd, 90607 Rückersdorf (DE)

(57) **Zusammenfassung**

Bei einem halbautomatischen Kommissioniersystem für ein Hochregallager (R1,R2,R3) ist ein hängender Kommissionierwagen (KW) vorgesehen, dessen Front für Übergabevorgänge direkt gegen ein Regel (R2) verfahrbar ist. Matrixartig können dabei jeweils mehrere Warenbehälter gehandhabt werden.

## Beschreibung

Die Erfindung bezieht sich auf ein Kommissioniersystem für ein mehrzeiliges Hochregallager, wobei mit Hilfe eines Regalbediengeräts mit Artikeln gefüllte Warenbehälter aber auch leere Warenbehälter in ersten Gassen des Hochregallagers handhabbar sind und wobei in zweiten Gassen des Hochregallagers mit Hilfe eines Kommissioniergeräts ein Kommissionieren erfolgt.

Aus dem Fachbuch 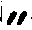 Materialfluß und Logistik" R.Jünemann, Springer-Verlag 1989, Kapitel 6.1.2 sind Realisierungsbeispiele für Kommissioniersysteme bekannt. Dabei wird jeweils ein Hochregallager vorgesehen, bei dem entweder ein Kommissionierer von Hand einen Kommissionierwagen durch die Regalgassen bewegt und dort das zu kommissionierende Gut aus dem Regal aufnimmt oder aber es ist ein vollautomatisches System vorgeschlagen, bei dem über Regalbediengeräte die jeweilige Ware in das Regal eingelagert wird und wobei mit Hilfe eines vollautomatischen Kommissionierroboters in weiteren Gassen des Regals das Kommissionieren erfolgt.

Während das erste System eine sehr hohe Personalbeanspruchung bedingt, erfordert das zweite vollautomatische System einen sehr hohen Geräteeinsatz.

Aufgabe der Erfindung ist es, ein Kommissioniersystem der eingangs genannten Art so auszubilden, daß mit geringem manuellen Einsatz dennoch eine hohe Kommissionierleistung gewährleistet ist.

Gemäß der Erfindung wird diese Aufgabe dadurch gelöst, daß als Kommissioniergerät mindestens ein von einer Bedienperson zu beladender manuell verschiebbarer oder motorisch angetriebener Kommissionierwagen vorgesehen ist, dessen Front im gleichen Abstandsmuster wie die Hochregale mit Warenbehältern bestückbar ist und daß zum Übergeben von kommissionierten Warenbehältern in Fächer des Hochregals und/oder Aufnehmen von leeren Warenbehältern das Kommissioniergerät regalfachfluchtend an das Hochregal verfahrbar ist.

Durch die fluchtende Ausgestaltung von Hochregal und Kommissioniergerät können die Übergabevorgänge für die Warenbehälter äußerst einfach und schnell erfolgen.

Dadurch, daß der Kommissionierwagen als Hängefahrzeug ausgebildet ist, bleibt der Bodenbereich ohne Stolpergefahr für die Kommissionierperson. In diesem Zusammenhang erweist es sich ferner als vorteilhaft, daß das Hängefahrzeug um eine Vertikalachse drehbar ist, wodurch auf kleinem Raum ein Ankoppeln des Kommissionierwagens an das Hochregal ermöglicht wird.

Dadurch, daß auf dem Kommissionierwagen leere Warenbehälter bevorratet sind, kann auf unnötig lange Verfahrwege zum Herbeiholen von Leerbehältern verzichtet werden. In diesem Zusammenhang erweist es sich als vorteilhaft, daß die leeren Warenbehälter auf der rückwärtigen Seite des Kommissionierwagens angeordnet sind, wodurch eine gute Raumausnutzung gewährleistet ist.

Eine Bedienerführung für die Kommissionierperson kann dadurch bewerkstelligt werden, daß Mittel zum Visiualisieren der jeweils zu bedienenden Warenbehälter vorgesehen sind und daß von der Bedienperson deren Handlungen quittierbar sind. Dabei kann es ferner vorgesehen sein, daß mit einem Monitor zusätzliche Angaben für die Bedienperson anzeigbar sind, wodurch eine besonders umfangreiche Visiualisierung ermöglicht wird. An Stelle von Warenbehältern können selbstverständlich auch Paletten treten.

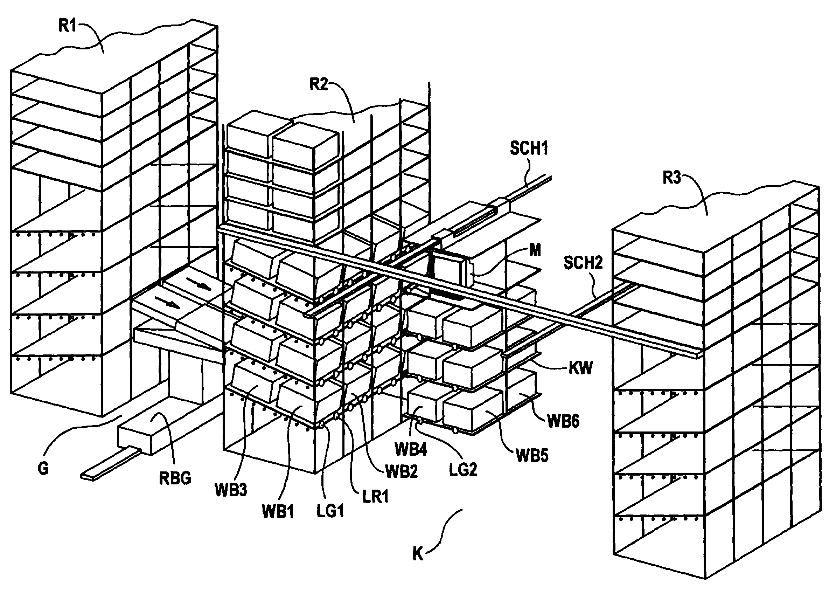

Ein Ausführungsbeispiel der Erfindung ist in der Zeichnung dargestellt und wird im folgenden näher erläutert.

Die Darstellung zeigt in Form einer Prinzipskizze ein Kommissioniersystem, das drei Regale R1 bis R3 eines zeilenförmigen Hochregallagers aufweist. Zwischen dem Regal R1 und dem Regal R2 befindet sich eine Gasse G, in der ein Regalbediengerät RBG dreidimensional verfahrbar ist. Mit Hilfe von Teleskopgabeln, deren eine Bewegungsrichtung durch Pfeile angedeutet ist, können Warenbehälter, so Warenbehälter WB1 bis WB3 des Regals R2 gehandhabt werden. Die Warenbehälter können dabei so in den jeweiligen Regalen R1 bis R3 angeordnet sein, daß im oberen Regalbereich eine Vorratshaltung erfolgt und im unteren Regalbereich die zu kommissionierenden Waren vorgehalten sind. Dabei kann der untere Regalbereich jeweils Durchlaufkanäle für zwei jeweils hintereinander angeordnete Warenbehälter aufweisen, die gegebenenfalls auf Rollen lagerbar sind. Im Ausführungsbeispiel sind dazu die Warenbehälter WB1 und WB3 eines tiefgelegenen Regalfaches des Regals R2 bezeichnet.

Zwischen den Regalen R2 und R3 befindet sich ein Kommissioniergang K, in dem sich zwei Kommissionierwagen befinden, die an Schienen SCH1 und SCH2 hängend gelagert sind. Dabei ist in der Darstellung nur der eine Kommissionierwagen KW gezeigt. Über die Schienen SCH1 und SCH2 kann dabei sowohl die mechanische Aufhängung erfolgen als auch der Energiefluß für der Übersichtlichkeit halber nicht dargestellte Antriebe der Kommissionierwagen, so des Kommissionierwagens KW. Ferner ist neben dem Energiefluß auch eine bidirektionale Kommunikation möglich. Selbstverständlich kann der Kommunikationsweg aber prinzipiell auch drahtlos gestaltet sein.

Wesentlich für die vorliegende Erfindung ist es nun, daß der Kommissionierwagen KW an seiner Frontseite, die einer der Übersichtlichkeit halber nicht dargestellten Kommissionierperson zugewandt ist, sechs Fächer für Warenbehälter, so beispielsweise für Warenbehälter WB4 und WB5 aufweist, wobei diese sechs möglichen Warenbehälter im gleichen Raster gelagert sind, wie die Warenbehälter im Regal R2, z.B. die Warenbehälter WB1, WB2. Dies ermöglicht es, daß der Kommissionierwagen KW bei einer Drehung um eine Vertikalachse, direkt vor sechs korrespondierend fluchtende Fächer des Regals R2 verbracht werden kann. Damit ist es möglich, sowohl fertig kommissionierte Warenbehälter vom Kommissionierwagen KW in leere Fächer des Regals R2 zu stellen als auch leere Kommissionierbehälter aus Fächern des Regals R2 in den Kommissionierwagen KW aufzunehmen.

An den einzelnen anzufahrenden Fächern des Regals R2 befinden sich ferner jeweils ein roter und ein grüner Leuchtgeber, so befinden sich am Ort des Warenbehälters WB1 ein grüner Leuchtgeber LG1 und ein roter Leuchtgeber LG2. Des weiteren befindet sich am Kommissionierwagen KW an jedem Fach jeweils ein grüner Leuchtgeber. So befindet sich am Fach für den Warenbehälter WB4 ein grüner Leuchtgeber LG2. Wenn im Regal R2 an Fächern der Warenbehälter grüne Leuchtgeber aufleuchten, bedeutet dies für die Kommissionierperson, von diesen Warenbehältern Gut aufzunehmen und in einem Warenbehälter des Kommissionierwagens abzulegen, der dann jeweils auch ein grünes Lichtsignal aufweist. Für den der Übersichtlichkeit halber nicht dargestellten zweiten Kommissionierwagen wären dann die roten Leuchtanzeigen relevant.

Außer dieser reinen Farbanzeige kann jeweils noch ein Monitor am jeweiligen Kommissionierwagen, so ein Monitor M am Kommissionierwagen KW vorgesehen sein, der zusätzliche Angaben, beispielsweise über die Anzahl des zu kommissionierenden Gutes angibt. Ferner können der Übersichtlichkeit halber nicht dargestellte Bedienapparaturen am jeweiligen Kommissionierwagen, so am Kommissionierwagen KW, vorgesehen sein.

Auf der rückwärtigen Seite der Kommissionierwagen, so des Kommissionierwagens KW, befinden sich sechs weitere Fächer für leere Warenbehälter, so den Warenbehälter WB6. Dabei kann der Kommissionierwagen, so der Kommissionierwagen KW, so ausgebildet sein, daß ein Durchschieben der Warenbehälter von der Front zur Rückseite möglich ist.

Zusammenfassend kann gesagt werden, daß bei diesem Kommissioniersystem ein halbautomatisches Kommissionieren mit Gehängen in einer Behälter- oder Palettenregalanlage möglich ist. Wesentlich ist dabei, daß ein Regalbediengerät einer Behälter- oder Palettenregalanlage automatisch Nachschub in den Kommissionierbereich fördert. Der Kommissionierbereich ist als Durchlaufregal ausgebildet. Langsamläuferartikel werden temporär bereitgestellt, d.h. nach dem Pickvorgang wird der Langsamläuferartikel wieder zurückgelagert. Schnelläuferartikel hingegen verbleiben im Kommissionierregal. Zwischen den Kommissionierregalen befindet sich eine Hängeförderanlage, die kommissionierte Ware in Behältnisse aufnehmen kann. In einer Kommissioniergasse können bis zu zwei Mitarbeitern mit je einem Hängefördergerät arbeiten. Fertig bearbeitete Kommissionierbehälter werden in das Regal zurückgeschoben und über das Regalbediengerät entsorgt. Durch die Reduzierung der Wegstrecken und der Platzeinsparung im Kommissionierregal ergibt sich eine hohe Wirtschaftlichkeit des Gesamtsystems.

## Patentansprüche

1. Kommissioniersystem für ein mehrzeiliges Hochregallager, wobei mit Hilfe eines Regalbediengeräts mit Artikeln gefüllte Warenbehälter aber auch leere Warenbehälter in ersten Gassen des Hochregallagers handhabbar sind und wobei in zweiten Gassen des Hochregallagers mit Hilfe eines Kommissioniergeräts ein Kommisionieren erfolgt, **dadurch gekennzeichnet,** daß als Kommissioniergerät mindestens ein von einer Bedienperson zu beladender manuell verschiebbarer oder motorisch angetriebener Kommissionierwagen (KW) vorgesehen ist, dessen Front im gleichen Abstandsmuster wie die Hochregale (R1,R2,R3) mit Warenbehältern (WB4,WB5) bestückbar ist und daß zum Übergeben von kommissionierten Warenbehältern (WB4,WB5) in Fächer des Hochregals (R2) und/oder Aufnehmen von leeren Warenbehältern das Kommissioniergerät (KW) regalfachfluchtend an das Hochregal (R3) verfahrbar ist.

2. Kommissioniersystem nach Anspruch 1, **dadurch gekennzeichnet,** daß der Kommissionierwagen als Hängefahrzeug (KW) ausgebildet ist.

3. Kommissioniersystem nach Anspruch 2, **dadurch gekennzeichnet,** daß das Hängefahrzeug (KW) um eine Vertikalachse drehbar ist.

4. Kommissioniersystem nach einem der vorstehenden Ansprüche, **dadurch gekennzeichnet,** daß auf dem Kommissionierwagen (KW) leere Warenbehälter (WB6) bevorratet sind.

5. Kommissioniersystem nach Anspruch 4, **dadurch gekennzeichnet,** daß die leeren Warenbehälter (WB6) auf der rückwärtigen Seite des Kommissionierwagens (KW) angeordnet sind.

6. Kommissioniersystem nach einem der vorstehenden Ansprüche, **dadurch gekennzeichnet,** daß Mittel (LG1,LG2,LR1) zum Visualisieren der jeweils zu bedienenden Warenbehälter (WB1,WB4) vorgesehen sind, und daß von der Bedienperson deren Handlungen quittierbar sind.

7. Kommissioniersystem nach Anspruch 6, **dadurch gekennzeichnet,** daß mit einem Monitor (M) zusätzliche Angaben für die Bedienperson anzeigbar sind.

8. Kommissioniersystem nach einem der vorstehenden Ansprüche, **dadurch gekennzeichnet,** daß an Stelle von Warenbehältern (WB1 bis WB6) Paletten verwendet werden.
